# EUROPÄISCHE PATENTSCHRIFT

(11) **EP 1 006 630 B1**
(45) Veröffentlichungstag und Bekanntmachung des Hinweises auf die Patenterteilung: **19.02.2003**
(21) Anmeldenummer: 99123630.8
(22) Anmeldetag: 27.11.1999
(51) Int. Cl.: H01T 13/08, H01T 13/52

(54) **Brennkammer für ein Kraftfahrzeug**
Combustion chamber for vehicle
Chambre de combustion pour véhicule

(30) Priorität: 03.12.1998 DE 19855791
(43) Veröffentlichungstag der Anmeldung: 07.06.2000
(73) Patentinhaber: ROBERT BOSCH GMBH, 70442 Stuttgart (DE)
(72) Erfinder: Herden, werner, 70839 Gerlingen (DE)

(56) Entgegenhaltungen:
- EP-A- 0 748 012
- DE-A- 19 627 524
- US-A- 2 129 576
- US-A- 4 272 697
- US-A- 5 187 404
- US-A- 5 731 654

## Beschreibung

Die Erfindung betrifft eine Brennkammer einer Brennkraftmaschine, die ein Kraftstoff-Einspritzventil und eine in einen Strahlbereich des Einspritzventils ragende Zündkerze mit zwei durch einen Isolatorkörper getrennten Elektroden umfaßt.

Eine solche Brennkammer ist aus DE 196 27 524 bekannt. Bei dieser bekannten Brennkammerkonstruktion wird eine Zündkerze eingesetzt, deren Elektroden sich beiderseits eines Luftspalts gegenüberliegen.

Bei einer Zündkerze mit Luftspalt tritt das Problem auf, daß bei starken Strömungen im Bereich des Luftspalts ein zwischen den Elektroden erzeugter Zündfunke von der Strömung mitgerissen wird, den Kontakt zu den Elektroden verliert und verlöscht, noch bevor er in der Lage ist, das Gemisch auf Zündtemperatur zu erhitzen. Zwar entsteht, solange Zündspannung anliegt, umgehend ein neuer Funke, doch ist die Gefahr nicht zu vernachlässigen, daß diesem das gleiche Schicksal widerfährt. Um diesen Effekt zu reduzieren, wurde in DE 196 27 524 vorgeschlagen, den Luftspalt mit Hilfe einer zu diesem konzentrisch angeordneten, im Querschnitt kreissektorförmigen Abschirmung gegen den direkten Einfluß des Einspritzstrahls zu schützen. Eine vollauf befriedigende Lösung des Problems des Ausblasens des Funkens wurde bislang jedoch nicht gefunden.

### Vorteile der Erfindung

Die vorliegende Erfindung löst das Problem gemäß den Merkmale des Anspruchs 1, indem sie anstelle eines Luftspalts eine Reihe von gegen die Elektroden und gegeneinander isolierten leitfähigen Elementen vorsieht, die eine Bahn für einen Zündfunken zwischen den zwei Elektroden an einer vom Einspritzventil abgewandten Seite des Isolatorkörpers festlegen. Die durch dieses Merkmal erzielte Verbesserung des Zündverhaltens wird darauf zurückgeführt, daß ein langer, besonders wirksamer Funke entsteht, und daß gleichzeitig an der vom Einspritzventil abgewandten, also im Windschatten liegenden Seite des Isolatorkörpers die Geschwindigkeit der Strömung des Zündgemischs niedrig und seine Turbulenz gering ist, so daß der Funke nicht ausgelenkt wird. Hinzu kommt, daß insbesondere die kleinsten Tropfen des Zündgemischs, deren Bewegung am engsten der in der Brennkammer herrschenden Luftströmung folgt, die vom Einspritzventil abgewandte Seite des Isolatorkörpers erreichen. Diese Tropfen sind mit dem geringsten Energieaufwand verdampfbar und deshalb für die Zündung des Gemischs besonders wertvoll.

Zur Begrenzung von Turbulenzen im Windschatten des Isolatorkörpers ist es sinnvoll, diesen zylindrisch zu formen.

Dabei hat der Isolatorkörper vorzugsweise die Form eines Rohres, wobei sich eine der Elektroden durch das Rohr erstreckt und einen Kopf aufweist, der gemäß einer bevorzugten Ausgestaltung eine Stirnfläche des Rohrs überdeckt.

Eine Länge der Bahn des Zündfunkens von 4 mm hat sich als geeignet erwiesen. Diese Länge kann mit einer Zündspannung erreicht werden, die sich nicht wesentlich von der herkömmlicher Zündkerzen mit Luftspalt unterscheidet, da die zwischen den Elektroden angeordneten leitfähigen Elemente zunächst die Entstehung sehr starker elektrischer Felder in den Teilspalten zwischen einer Elektrode und einem Element beziehungsweise zwischen den Elementen begünstigen. Die Gesamtbreite dieser Spalte kann der Breite des Luftspalts einer herkömmlichen Zündkerze entsprechen. Sobald aber ein Funke auf den Teilspalten gezündet ist, vereinigen sich die einzelnen Teilfunken schnell zu einem sich über die gesamte Strecke zwischen den Elektroden erstreckenden Funken.

Um den eventuell gegen Temperatursprünge empfindlichen Isolatorkörper vor einer zu heftigen Abkühlung durch auftreffendes Gemisch an der dem Einspritzventil zugewandten Seite zu schützen, kann an dieser Seite ein Abschirmschild montiert sein. Dieser Abschirmschild verursacht nur kleinräumige zusätzliche Turbulenzen, da das in seinem Windschatten liegende Volumen im wesentlichen von dem Isolatorkörper ausgefüllt ist.

Der Abschirmschild kann an der Wand der Brennkammer oder auch an der Zündkerze montiert sein, wobei letztere Lösung den Vorteil hat, daß sie die Anwendung der Erfindung auch in einer herkömmlichen Brennkraftmaschine alleine durch Austausch der Zündkerzen ermöglicht.

Um zu garantieren, daß die in der Wand einer Brennkammer montierte Zündkerze die richtige Orientierung hat, sind ein Außengewinde der Zündkerze und ein Innengewinde einer Aufnahmebohrung der Brennkammerwand so angelegt, daß sie eine festverschraubte Stellung der Zündkerze festlegen, in der die leitfähigen Elemente sich an der vom Einspritzventil abgewandten Seite des Isolatorkörpers befinden. Eine entsprechende Wirkung kann erzielt werden, wenn bei der Verschraubung der Zündkerze in der Aufnahmebohrung ein Ausgleichsring von passend zu wählender Dicke verwendet wird.

Weitere Merkmale und Vorteile der Erfindung ergeben sich aus der nachfolgenden Beschreibung von Ausführungsbeispielen.

### Figuren

Es zeigen:
- Figur 1: ein Einspritzventil und eine Zündkerze, eingebaut in die Wand einer Brennkammer;
- Figur 2: eine Variante der Zündkerze gemäß der Erfindung; und
- Figur 3: eine Draufsicht auf die Zündkerze aus Figur 2.

### Beschreibung von Ausführungsbeispielen

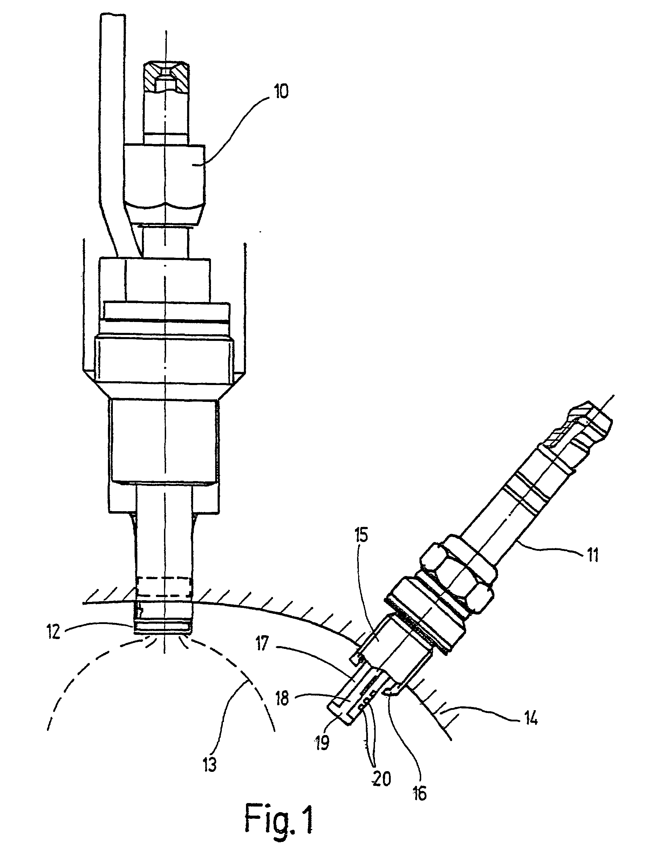

Figur 1 zeigt schematisch ein Einspritzventil 10 und eine Zündkerze 11, wie sie in Bezug zueinander in einer Brennkammer angeordnet sind, deren Wand 14 nur ausschnittweise schematisch angedeutet ist. Das Einspritzventil 10 spritzt den Brennstoff an seinem brennkammerseitigen Ende 12 in die Brennkammer ein. Dabei breitet sich der Brennstoff in etwa in einem Kegel, wie er durch die gestrichelten Linien 13 angegeben ist, in der Brennkammer aus, und wird dabei vernebelt, so daß ein Kraftstoff-Luft-Gemisch entsteht.

In Nachbarschaft zum Einspritzventil 10 ist die Zündkerze 11 mit ihrem Außengewinde 15 in der Wand 14 der Brennkammer verschraubt. Am brennkammerseitigen Ende des Gewindes 15 steht eine mit dem Gewinde einteilige Spitze 16 ins Innere der Brennkammer und in Richtung der Achse der Zündkerze 11 vor. Diese Spitze bildet eine Masseelektrode des Zündfunkens. Entlang der Achse der Zündkerze erstreckt sich ein hohlzylindrischer Isolatorkörper 17. Eine Mittelelektrode 18 verläuft stiftförmig durch den axialen Hohlraum des Isolatorkörpers 17 bis zu einem Kopf 19, der die der Brennkammer zugewandte Stirnfläche des Isolatorkörpers 17 abdeckt. Der Isolatorkörper 17 trägt an seiner der Masseelektrode 16 zugewandten und von dem Einspritzventil 10 abgewandten Seite eine Reihe von leitfähigen Elementen 20.

Das Gewinde 15 sowie das dazu komplementäre Innengewinde der Bohrung der Brennkammerwand 14, die die Zündkerze aufnimmt, sind so bemessen, daß die Zündkerze 11 eine festverschraubte Stellung dann erreicht, wenn die Masseelektrode 16 und die leitfähigen Elemente 20 sich an der von dem Einspritzventil 10 abgewandten Seite der Zündkerze befindet.

Alternativ hierzu kann bei der Montage der Zündkerze 11 im Bedarfsfall ein Zwischenring (nicht dargestellt) eingesetzt werden, der zwischen einem Flansch der Zündkerze und einer Stufe der Bohrung der Brennkammerwand 14 oder deren Außenseite zu liegen kommt, und dessen Dicke jeweils so gewählt wird, daß die Zündkerze eine fest verschraubte Stellung dann erreicht, wenn sich die leitfähigen Elemente 20 an der vom Einspritzventil abgewandten Seite des Isolatorkörpers befinden.

Wenn Kraftstoff in die Brennkammer eingespritzt wird, verdampft er größtenteils spontan, mischt sich mit Luft und wird zusammen mit eventuell verbleibenden kleinen Kraftstofftröpfchen in der Strömung an die abgewandte Seite des Isolatorkörpers 17 in die Nähe der leitfähigen Elemente 20 geführt. Wenn an die Mittelelektrode 18 eine Zündspannung angelegt wird, bilden sich starke elektrische Felder an der Oberfläche des Isolatorkörpers 17 im Bereich zwischen dem Kopf 19 der Mittelelektrode und dem nächstliegenden leitfähigen Element 20, zwischen den leitfähigen Elementen 20 sowie zwischen dem letzten der leitfähigen Elemente 20 und der Masseelektrode 16. Diese zünden zunächst den Funken auf den einzelnen Spalten zwischen den Elektroden 16, 18 und den leitfähigen Elementen 20, die sich binnen Mikrosekunden zu einem einheitlichen, sich über die leitfähigen Elemente 20 hinweg von einer Elektrode 18 zur anderen 16 erstreckenden Funken vereinigen. Dieser Funke ist äußerst stabil, da er aufgrund seiner engen Nachbarschaft zur Oberfläche des Isolatorkörpers 17 keinen wesentlichen turbulenten Strömungen ausgesetzt ist, die ihn in die eine oder andere Richtung fortreißen könnten. Es entsteht somit ein sehr stabiler Zündfunken, der mit dem den Isolatorkörper umströmenden Kraftstoffluftgemisch gut versorgt ist und sehr zuverlässig und gleichmäßig zündet.

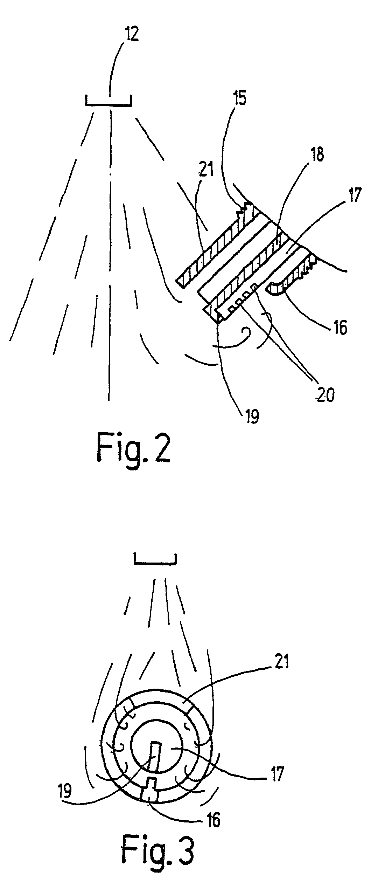

Figur 2 zeigt eine Abwandlung der Anordnung aus Figur 1. In Figur 2 sind lediglich die Spitze 12 des Einspritzventils, der davon ausgehende Kraftstoffnebel sowie das brennkammerseitige Ende der Zündkerze 11 im Schnitt dargestellt. Figur 3 zeigt eine Draufsicht auf dieses Ende in axialer Richtung.

Ein Abschirmschild 21 ist einteilig mit dem Gewinde 15 der Zündkerze und der Masseelektrode 16 ausgebildet und erstreckt sich über die gesamte Länge des Isolatorkörpers 17 bis in Höhe des Kopfes 19 der Mittelelektrode. Dieser Kopf ist bei dieser Ausgestaltung als ein hakenförmiges Element ausgebildet, das sich von der Längsachse der Zündkerze aus in radialer Richtung von dem Abschirmschild 21 fort bis an den Rand der zylindrischen Außenfläche des Isolatorkörpers 17 erstreckt. Diese Gestaltung des Kopfes 19 schließt aus, daß ein Zündfunke zwischen dem Kopf und dem Abschirmschild 21 überspringt. Der Zündfunke wird vielmehr, wie bei der ersten Ausgestaltung, zuverlässig entlang der leitfähigen Elemente 20 zur Masseelektrode 16 geführt.

Wie durch Striche 22 in den Figuren 2 und 3 angedeutet, umströmt das Luft-Kraftstoff-Gemisch vom Ende 12 des Einspritzventils aus die Zündkerze, wobei sich an der von dem Einspritzventil abgewandten Seite des Isolatorkörpers 17 (siehe Figur 2) sowie an den seitlichen Kanten des Abschirmschildes 21 (siehe Figur 3) mäßig turbulente Bereiche ausbilden, die durch Spirallinien angedeutet sind. Dabei ist allerdings der Zündfunken durch den Isolatorkörper 17 weitgehend vor dem direkten Einfluß der Turbulenzen geschützt. Turbulenzen, die am Abschirmschild 21 entstehen, sind, durch den Abstand zwischen der Kante des Abschirmschildes 21 und der Oberfläche des Isolatorkörpers 17 bestimmt, kleinräumig im Verhältnis zu den Abmessungen der Zündkerze und sind deshalb weitgehend abgeklungen und haben somit zu einer effektiven Homogenisierung des Luft-Kraftstoff-Gemischs beigetragen, bevor dieses Gemisch die Rückseite des Isolatorkörpers 17 und den Zündfunken zwischen den zwei Elektroden erreicht. Auf diese Weise ist für eine gute und gleichmäßige Gemischstoffversorgung des Zündfunkens gesorgt.

Der Abschirmschild 21 hat zusätzlich die Wirkung, daß er einen Großteil der vom Einspritzventil ausgestoßenen Kraftstofftröpfchen daran hindert, direkt auf den Isolatorkörper 17 aufzutreffen und diesen zu stark abzukühlen, was zur Bildung von Rissen in dessen Keramikmaterial führen und die Lebensdauer der Zündkerze verringern könnte. So kann der Isolatorkörper 17 im Betrieb der Brennkraftmaschine eine gleichbleibend hohe Arbeitstemperatur erreichen und verhindert, daß sich Ruß auf dem Isolatorkörper 17 absetzt, der dessen Isolationswirkung beeinträchtigen könnte.

Gemäß einer nicht dargestellten Abwandlung kann der Isolatorkörper 17 gegen den Körper der Zündkerze frei drehbar sein und eine Kodierung aufweisen, die in eine komplementäre Kodierung der Aufnahmebohrung der Brennkammerwand 14 eingreift, so daß während des Einschraubens der Zündkerze der Isolator von Anfang an die gewünschte Orientierung in Bezug zum Einspritzventil innehat und während des Verschraubens beibehält. Bei dieser Variante kann der Abschirmschild ebenfalls drehbar und mit dem Isolatorkörper fest verbunden sein.

## Patentansprüche

1. Brennkammer einer Brennkraftmaschine, die ein Kraftstoff-Einspritzventil (10) und eine Zündkerze (11) mit zwei durch einen Isolatorkörper (17) getrennten Elektroden (16,18) umfaßt, **dadurch gekennzeichnet, daß** der Isolatorkörper (17) eine Reihe von gegen die Elektroden (16,18) und gegeneinander isolierten leitfähigen Elementen (20) trägt, die eine Bahn für einen Zündfunken zwischen den zwei Elektroden (16,18) an einer vom Einspritzventil (10) abgewandten Seite des Isolatorkörpers (17) festlegen.

2. Brennkammer nach Anspruch 1, **dadurch gekennzeichnet, daß** der Isolatorkörper (17) zylindrisch geformt ist.

3. Brennkammer nach Anspruch 1 oder 2, **dadurch gekennzeichnet, daß** der Isolatorkörper (17) die Form eines Rohres hat und eine der Elektroden (18) sich durch das Rohr erstreckt und einen Kopf (19) aufweist, der eine Stirnfläche des Rohrs überdeckt.

4. Brennkammer nach einem der vorhergehenden Ansprüche, **dadurch gekennzeichnet, daß** die Bahn des Zündfunkens eine Länge von ca. 4 mm hat.

5. Brennkammer nach einem der vorhergehenden Ansprüche, **dadurch gekennzeichnet, daß** ein Abschirmschild (21) an der dem Einspritzventil (10) zugewandten Seite des Isolatorkörpers (17) vorgesehen ist.

6. Brennkammer nach Anspruch 5, **dadurch gekennzeichnet, daß** der Abschirmschild (21) an der Zündkerze montiert ist.

7. Brennkammer nach einem der vorhergehenden Ansprüche, **dadurch gekennzeichnet, daß** ein Außengewinde (15) der Zündkerze (11) und ein Innengewinde einer Aufnahmebohrung der Brennkammerwand (14) so angelegt sind, daß sie eine fest verschraubte Stellung der Zündkerze (11) festlegen, in der die leitfähigen Elemente (20) sich an der vom Einspritzventil (10) abgewandten Seite des Isolatorkörpers (17) befinden.

8. Brennkammer nach Anspruch 6, **dadurch gekennzeichnet, daß** die Zündkerze unter Verwendung eines Ausgleichsrings in der Aufnahmebohrung verschraubt ist.

## Claims

1. Combustion chamber of an internal combustion engine, the said combustion chamber comprising a fuel injection valve (10) and a spark plug (11) with two electrodes (16, 18) separated by an insulator body (17), **characterized in that** the insulator body (17) carries a series of conductive elements (20) which are insulated relative to the electrodes (16, 18) and relative to one another and which define a path for an ignition spark between the two electrodes (16, 18) on a side of the insulator body (17) which faces away from the injection valve (10).

2. Combustion chamber according to Claim 1, **characterized in that** the insulator body (17) has a cylindrical shape.

3. Combustion chamber according to Claim 1 or 2, **characterized in that** the insulator body (17) has the shape of a tube, and one of the electrodes (18) extends through the tube and has a head (19) which covers one end face of the tube.

4. Combustion chamber according to one of the preceding claims, **characterized in that** the path of the ignition spark has a length of approximately 4 mm.

5. Combustion chamber according to one of the preceding claims, **characterized in that** a screening shield (21) is provided on that side of the insulator body (17) which faces the injection valve (10).

6. Combustion chamber according to Claim 5, **characterized in that** the screening shield (21) is mounted on the spark plug.

7. Combustion chamber according to one of the preceding claims, **characterized in that** an external thread (15) of the spark plug (11) and an internal thread of a receiving bore of the combustion-chamber wall (14) are laid out in such a way that they define a firmly screwed position of the spark plug (11) in which the conductive elements (20) are located on that side of the insulator body (17) which faces away from the injection valve (10).

8. Combustion chamber according to Claim 6, **characterized in that** the spark plug is screwed in the receiving bore, using a compensating ring.

## Revendications

1. Chambre de combustion pour un moteur à combustion interne comprenant un injecteur de carburant (10) et une bougie (11) à deux électrodes (16, 18) séparées par un corps d'isolateur (17),
**caractérisée en ce que**
le corps d'isolateur (17) porte une série d'éléments (20) conducteurs, isolés les uns par rapport aux autres et par rapport aux électrodes (16, 18), ces éléments fixant un chemin pour une étincelle d'allumage entre les deux électrodes (16, 18) sur un côté du corps d'isolateur (17) à l'opposé de l'injecteur (10).

2. Chambre de combustion selon la revendication 1,
**caractérisée en ce que**
le corps d'isolateur (17) est de forme cylindrique.

3. Chambre de combustion selon la revendication 1 ou 2,
**caractérisée en ce que**
le corps d'isolateur (17) a la forme d'un tube et l'une des électrodes (18) traverse le tube et comporte une tête (19) qui recouvre une surface frontale du tube.

4. Chambre de combustion selon l'une des revendications précédentes,
**caractérisée en ce que**
le chemin des étincelles d'allumage a une longueur d'environ 4 mm.

5. Chambre de combustion selon l'une des revendications précédentes,
**caractérisée par**
un écran (21) prévu sur le côté du corps d'isolateur (17) tourné vers l'injecteur (10).

6. Chambre de combustion selon la revendication 5,
**caractérisée en ce que**
l'écran protecteur (21) est monté sur la bougie d'allumage.

7. Chambre de combustion selon l'une quelconque des revendications précédentes,
**caractérisée par**
un filetage extérieur (15) de la bougie (11) et un filetage intérieur d'un perçage de réception de la paroi de la chambre de combustion (14), conçu pour fixer une position vissée, précise de la bougie (11) dans laquelle les éléments conducteurs (20) se trouvent sur le côté du corps d'isolateur (17) à l'opposé de l'injecteur (10).

8. Chambre de combustion selon la revendication 6,
**caractérisée en ce que**
la bougie est vissée dans le perçage de réception à l'aide d'une bague de compensation.
